Europäisches Patentamt

European Patent Office

Office européen des brevets

(19)

(11) Numéro de publication: **0014141**
**B1**

(12) FASCICULE DE BREVET EUROPEEN

(45) Date de publication du fascicule du brevet:
**29.12.82**

(51) Int. Cl.³: **C 03 C 27/12**, B 32 B 17/10

(21) Numéro de dépôt: **80400085.9**

(22) Date de dépôt: **21.01.80**

(54) Vitrage composite à haute résistance aux impacts.

(30) Priorité: **23.01.79 FR 7901596**

(43) Date de publication de la demande:
**06.08.80 Bulletin 80/16**

(45) Mention de la délivrance du brevet:
**29.12.82 Bulletin 82/52**

(84) Etats contractants désignés:
**AT BE CH DE GB IT LU NL SE**

(56) Documents cités:
**FR-A-1 522 229**
**FR-A-2 175 884**
**US-A-3 398 040**

(73) Titulaire: **BRINK'S FRANCE S.A. Société dite:, 49, rue Réaumur, F-75003 Paris (FR)**

(72) Inventeur: **Sauret, Jacques, 10 Rue Pierre Curie, F-95830 Cormeilles en Vexin (FR)**
Inventeur: **Grosse, Gérard, 1 bis Avenue de Breteuil, F-75007 Paris (FR)**

(74) Mandataire: **Lavoix, Jean et al, c/o Cabinet Lavoix 2, Place D'Estienne D'Orves, F-75441 Paris Cedex 09 (FR)**

## Vitrage composite à haute résistance aux impacts

La présente invention concerne un vitrage composite à haute résistance aux impacts, notamment aux projectiles tirés par des armes à feu.

Il est déjà connu de réaliser un tel vitrage au moyen d'une feuille d'un polycarbonate interposée entre deux feuilles de verre qui sont collées sur la feuille de polycarbonate et qui peuvent elles-mêmes faire ou non partie d'un vitrage feuilleté, par exemple du type triplex.

Grâce à la très haute résistance aux impacts des polycarbonates, ce vitrage permet, à poids égal, d'améliorer sensiblement la résistance aux impacts par rapport aux autres vitrages pare-balles ou analogues connus. Il a toutefois été constaté que cette résistance aux impacts du vitrage composite à feuille de polycarbonate décrit ci-dessus n'est pas aussi bonne que celle à laquelle on pourrait théoriquement s'attendre comptetenu de l'efficacité balistique propre au polycarbonate. En outre, les coefficients de dilatation différents du verre et du polycarbonate posent pour ce vitrage composite connu des problèmes de tenue aux températures extrêmes qui n'ont pas été jusqu'à présent maîtrisés.

On connait par ailleurs un pare-brise de sécurité pour véhicule, décrit au brevet français n° 1 522 229, comprenant deux feuilles de verre entre lesquelles sont disposées une première feuille de matière plastique collée sur l'une des feuilles de verre et une mince couche d'un liquide qui mouille les deux surfaces intérieures en regard, ce liquide étant maintenu par un joint d'étanchéité marginal d'une nature quelconque.

Cet agencement a pour but de procurer au pare-brise la flexibilité maximale possible afin qu'en cas de choc, par exemple de la tête d'un passager, la feuille intérieure présente une plus grande souplesse puisqu'elle n'est pas retenue directement pas la feuille extérieure.

Cependant cet agencement bien qu'efficace en ce qui concerne la souplesse et la protection des passagers du véhicule ne présente strictement aucune résistance aux impacts extrêmement localisés tels que ceux produits par des projectiles d'armes à feu.

La Demanderesse a par contre constaté que lorsqu'on interpose une pellicule d'un liquide incompressible entre deux feuilles relativement rigides, la force d'un impact localisé appliquée à l'une des feuilles se trouve répartie beaucoup plus uniformément sur la deuxième plaque de sorte qu'on peut ainsi améliorer la résistance aux impacts, notamment aux projectiles tirés par des armes à feu, des vitrages de sécurité connus.

L'invention vise donc à réaliser un vitrage composite à haute résistance aux impacts, du type comprenant au moins une feuille de matière plastique transparente résistante aux impacts interposée entre deux feuilles de verre, qui permette d'éviter les inconvénients mentionnés ci-dessus du vitrage composite connu à base de polycarbonate.

A cet effet, l'invention a pour objet un vitrage du type précité qui comprend une pellicule d'un liquide transparent interposée entre chaque face de ladite feuille en matière plastique et la feuille de verre adjacente, et un joint d'étanchéité s'étendant à la périphérie du vitrage.

Suivant une caractéristique de l'invention, ledit liquide transparent est par exemple du glycol.

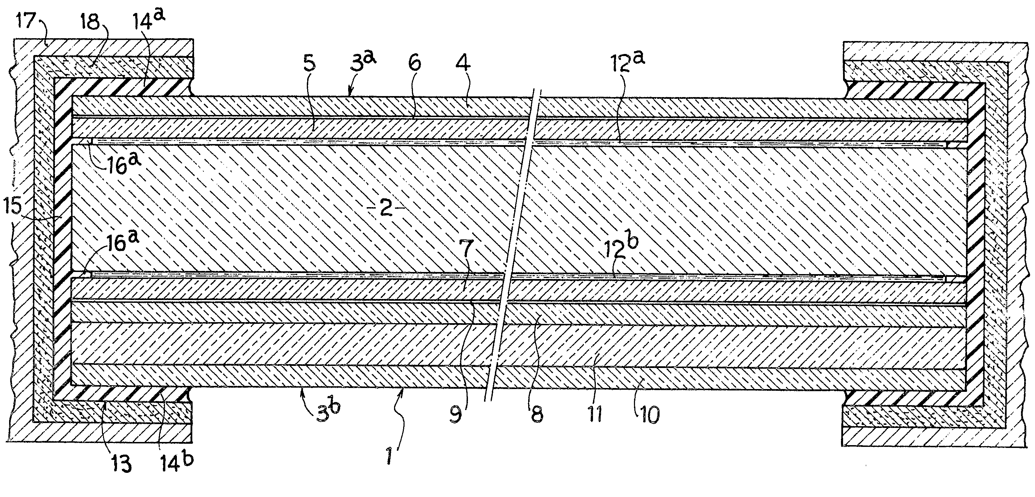

D'autres caractéristiques et aventages de l'invention ressortiront de la description qui va suivre, faite en se référant au dessin annexé donné uniquement à titre d'exemple et sur lequel:

— la Fig. unique est une vue en coupe transversale d'un vitrage composite à heute résistance aux impacts suivant l'invention.

Le vitrage 1 représenté sur la Fig. comprend une feuille 2 relativement épaisse d'une matière plastique transparente résistante aux impacts, par exemple un polycarbonate. La feuille 2 en matière plastique est interposée entre deux vitrages feuilletés de type connu 3a et 3b. Le vitrage 3a est un triplex qui comprend deux feuilles de verre 4 et 5 assemblées entre elles par une pellicule 6 de butyral de polyvinyle. Le vitrage feuilleté 3b comprend un triplex constitué de deux feuilles de verre 7 et 8 assemblées entre elles par une pellicule 9 constituée d'un petit nombre de feuilles de butyral de polyvinyle, une feuille de verre supplémentaire 10 étant assemblée avec la feuille 8 de ce triplex par une couche 11 relativement épaisse constituée d'un grand nombre de feuilles de butyral de polyvinyle. Le vitrage feuilleté 3b est également un produit connu disponible sur le marché..

Conformément à l'invention, une pellicule 12a, 12b d'un liquide transparent est interposée entre chaque face de la feuille 2 en matière plastique et la feuille de verre adjacente 5 et, 7 respectivement. Ce liquide, qui peut avoir une certaine viscosité, est par exemple du glycol qui a l'avantage de présenter un très bas point de congélation et de permettre par conséquent l'utilisation du vitrage 1 dans des conditions climatiques extrêmes. L'étanchéité au liquide entre la feuille 2 en matière plastique et les feuilles de verre adjacentes 5 et 7 est assurée au moyen d'un cadre 13 à section en U formant joint extérieur qui s'étend autour du vitrage 1 et dont les ailes 14a, 14b sont collées contre les faces extérieures des vitrages feuilletés 3a et 3b respectivement. Le cadre 13 comporte en outre une âme 15 sur laquelle font saillie vers l'intérieur deux parties annulaires périphériques 16a, 16b formant joint intérieur qui sont disposées chacune entre une zone marginale de la feuille 2 de matière plastique et la zone marginale en regard de la feuille de verre adjacente 5, 7 respectivement. Les parties annulaires 16a et 16b sont fixées aux zones marginales correspondantes des feuilles de verre 5 et 7 par collage et l'épaisseur de ces parties annulaires est égale ou inférieure à celle des pellicules 12a et 12b de liquide transparent. De préférence, le cadre 13 et les parties annulaires en saillie 16a et 16b sont venues de matière et sont réalisées en une matière plastique présentant une certaine souplesse. Grâce à ce mode de réalisation du joint d'étanchéité, la feuille de matière plastique 2 n'est pas fixée directement aux feuilles de verre adjacentes 5 et 7, ce qui supprime les problèmes liés à la dilatation différentielle de la feuille de matière plastique et des feuilles de verre adjacentes qui apparaissaient dans le vitrage connu décrit au début du présent mémoire. Au contraire, l'agencement du joint d'étanchéité suivant l'invention permet que cette dilatation différentielle se produise sans qu'il en résulte une déformation de la feuille 2 de matière plastique ou de l'une ou plusieurs des feuilles de verre constitutives des vitrages feuilletés 3a et 3b du fait que le cadre 13, par sa souplesse, absorbe ces différences de dilatation. En outre, bien que les parties annulaires 16a et 16b ne soient pas fixées à la feuille 2 en matière plastique, l'étanchéité est parfaitement assurée du fait que, d'une part, ces parties annulaires 16a, 16b sont collées aux feuilles de verre 5 et 7 et que, d'autre part, les ailes 14a, 14b du cadre 13 sont collées aux faces en regard des vitrages feuilletés 3a et 3b, ce qui empêche toute fuite vers l'extérieur du liquide transparent des pellicules 12a et 12b.

Enfin, lorsque le vitrage 1 est monté dans un châssis fixe 17, un joint 18 en mastic ou analogue est interposé entre ce châssis 17 et le cadre 13.

En dehors du fait qu'il permet de résoudre les problèmes de tenue dans des conditions climatiques extrêmes, le vitrage suivant l'invention a l'avantage inattendu de présenter une efficacité balistique nettement améliorée par rapport à celle du vitrage connu précité. Bien que les causes de cette amélioration soient difficiles à déterminer, on peut penser que l'interposition d'une pellicule de liquide entre la feuille de matière plastique et les feuilles de verre adjacentes a pour effet d'isoler complètement cette feuille de matière plastique et de lui permettre de mettre pleinement à profit ses qualités balistiques, ce qui n'est pas le cas dans le vitrage connu dans lequel la feuille de polycarbonate est collée aux feuilles de verre adjacentes.

Bien qu'un seul mode de réalisation de l'invention ait été décrit ci-dessus, il doit être compris que de nombreuses modifications peuvent y être apportées sans sortir du cadre de l'invention. C'est ainsi que, par exemple, le joint d'étanchéité décrit pourrait être remplacé par un simple joint périphérique souple en mastic ou analogue disposé à la place des parties annulaires 16a et 16b et fixé respectivement à la feuille de matière plastique 2 et aux feuilles de verre 5 et 7. Par ailleurs, les vitrages feuilletés 3a et 3b pourraient avoir une structure différente et, à la limite, ces vitrages pourraient être réduits dans certaines applications à une feuille de verre unique. On notera enfin que le terme »verre« est utilisé ici pour désigner tout matériau tel que le verre, la glace ou analogue que est transparent et dont la surface est suffisamment dure pour ne pas pouvoir être rayée aisément.

Le vitrage suivant l'invention peut être utilisé dans toutes les applications où il est nécessaire de disposer d'un panneau transparent et léger qui soit très résistant aux impacts, par exemple pour la réalisation de pare-brise et de vitres de véhicules automobiles, de fenêtres ou de portes d'immeubles, etc.

**Revendications**

1. Vitrage composite à haute résistance aux impacts, comprenant au moins une feuille de matière plastique transparente résistante aux impacts (2) interposée entre deux feuilles de verre (5, 7), caractérisé en ce qu'il comprend une pellicule (12a, 12b) d'un liquide transparent interposée entre chaque face de ladite feuille (2) en matière plastique et la feuille de verre adjacente (5, 7), et un joint d'étanchéité (13) s'étendant à la périphérie du vitrage.

2. Vitrage composite suivant la revendication 1, caractérisé en ce que ledit liquide est du glycol.

3. Vitrage composite suivant l'une quelconque des revendications précédentes, caractérisé en ce qu'au moins l'une desdites feuilles de verre (5, 7) fait partie d'un vitrage feuilleté (3a, 3b).

4. Vitrage composite suivant la revendication 3, caractérisé en ce que, comme connu en soi, ledit vitrage feuilleté (3a, 3b) comprend ladite feuille de verre (5, 7) et une seconde feuille de verre (4, 8) assemblées entre elles par une pellicule (6, 9) constituée d'un petit nombre de feuilles de butyral de polyvinyle.

5. Vitrage composite suivant l'une quelconque des revendications 3 et 4, caractérisé en ce que chacune desdites feuilles de verre (5, 7) encadrant ladite feuille (2) de matière plastique fait partie d'un vitrage feuilleté (3a, 3b).

6. Vitrage composite suivant la revendication 5 lorsqu'elle dépend de la revendication 4, caractérisé en ce que l'un (3b) desdits vitrages feuilletés comprend en outre une couche épaisse (11) constituée d'un grand nombre de feuilles de butyral de polyvinyle et intercalée entre ladite seconde feuille de verre (8) et une troisième feuille de verre (10).

7. Vitrage composite suivant l'une quelconque des revendications précédentes, caractérisé en ce que ladite matière plastique transparente résistante aux impacts est un polycarbonate.

8. Vitrage composite suivant l'une quelconque des revendications 1 à 7, caractérisé en ce que ledit joint d'étanchéité comprend un cadre (13) à section en U formant joint extérieur qui s'étend autour dudit vitrage et dont les ailes (14a, 14b) du U sont collées contre les faces extérieures dudit vitrage composite, ledit cadre présentant deux parties annulaires périphériques (16a, 16b) en saillie vers l'intérieur et formant joint intérieur que sont disposées chacune entre une zone marginale de la feuille de matière plastique (2) et la zone marginale en regard de la feuille de verre adjacente (5, 7), lesdites parties en saillie (16a, 16b) étant collées auxdites feuilles de verre (5, 7).

9. Vitrage composite suivant la revendication 5, caractérisé en ce que ledit cadre (13) et lesdites parties en saillie (16a, 16b) sont venues de matière et sont réalisées en matière plastique.


**Patentansprüche**

1. Verbundfensterscheibe mit hoher Festigkeit gegen Stöße, mit mindestens einer Scheibe (2) aus transparentem, gegen Stöße widerstandsfähigen Kunststoffmaterial, eingebettet zwischen zwei Glasscheiben (5, 7), dadurch gekennzeichnet, daß sie einen Film (12a, 12b) einer transparenten Flüssigkeit zwischen jeder Seite der Scheibe (2) aus Kunststoffmaterial und der benachbarten Glasscheibe (5, 7) umfaßt sowie eine Dichtung (13), die sich an der Peripherie der Verbundfensterscheibe erstreckt.

2. Verbundfensterscheibe nach Anspruch 1, dadurch gekennzeichnet, daß die Flüssigkeit Glykol ist.

3. Verbundfensterscheibe nach einem der vorangehenden Ansprüche, dadurch gekennzeichnet, daß mindestens eine der Glasscheiben (5, 7) Teil einer geschichteten Fensterscheibe (3a, 3b) ist.

4. Verbundfensterscheibe nach Anspruch 3, dadurch gekennzeichnet, daß sie an sich bekannt die geschichtete Fensterscheibe (3a, 3b), die erwähnte Glasscheibe (5, 7) sowie eine zweite Glasscheibe (4, 8) umfaßt, die miteinander durch einen Film (6, 9) verbunden sind, bestehend aus einer kleinen Anzahl von Polyvinylbutyralbahnen.

5. Verbundfensterscheibe nach einem der Ansprüche 3 und 4, dadurch gekennzeichnet, daß jede der Glasscheiben (5, 7), welche die Scheibe (2) aus Kunststoffmaterial umrahmen, einen Teil einer geschichteten Verbundfensterscheibe (3a, 3b) ist.

6. Verbundfensterscheibe nach Anspruch 5 soweit von Anspruch 4 abhängig, dadurch gekennzeichnet, daß eine (3b) der geschichteten Fensterscheiben eine dicke Schicht (11) umfaßt, bestehend aus einer großen Anzahl von Polyvinylbutyralbahnen und eingeschaltet zwischen die zweite Glasscheibe (8) und eine dritte Glasscheibe (10).

7. Verbundfensterscheibe nach einem der vorangehenden Ansprüche, dadurch gekennzeichnet, daß das transparente gegen Stöße widerstandsfähige Kunststoffmaterial ein Polycarbonat ist.

8. Verbundfensterscheibe nach einem der Ansprüche 1 bis 7, dadurch gekennzeichnet, daß die Abdichtung einen Rahmen (13) mit U-förmigem Querschnitt umfaßt, welcher die Außendichtung bildet, die sich um die Verglasung erstreckt und deren U-Schenkel (14a, 14b) gegen die Außenseiten der Verbundfensterscheibe geklebt sind, welcher Rahmen zwei periphere Ringabschnitte (16a, 16b) aufweist, die nach innen vorstehen und Innendichtungen bilden, welche jeweils zwischen eine Randzone der Scheibe (2) aus Kunststoffmaterial und die gegenüberliegende Randzone der benachbarten Glasscheibe (5, 7) eingebettet sind, welche vorspringenden Abschnitte (16a, 16b) an die Glasscheiben (5, 7) angeklebt sind.

9. Verbundfensterscheibe nach Anspruch 5, dadurch gekennzeichnet, daß der Rahmen (13) und die vorspringenden Abschnitte (16a, 16b) aus dem Material gekommen sind und aus Kunststoffmaterial bestehen.


**Claims**

1. A composite pane having a high resistance to impacts, comprising at least one transparent sheet (2) of plastics material which resists impacts and is interposed between two sheets of glass (5, 7) characterized in that it includes a film (12a, 12b) of a transparent liquid interposed between each face of said sheet (2) of plastics material and the adjacent sheet of glass (5, 7) and a sealing element (13) extending around the periphery of the pane.

2. A pane as claimed in claim 1, wherein said liquid is glycol.

3. A pane as claimed in any one of the preceding claims, wherein at least one of said sheets of glass (5, 7) is part of a laminated pane (3a, 3b).

4. A pane as claimed in claim 3, wherein as known per se, said laminated pane (3a, 3b) comprises said sheet of glass (5, 7) and a second sheet of glass (4, 8) which are assembled together by a film (6, 9) constituted by a small number of sheets of polyvinyl butyral.

5. A pane as claimed in claim 3 or 4, wherein each of said sheets of glass (5, 7) surrounding said sheet (2) of plastics material is part of a laminated pane (3a, 3b).

6. A pane as claimed in claim 5 when dependent from claim 4, wherein one (3b) of said laminated panes further comprises a thick layer (11) formed by a large number of sheets of polyvinyl butyral and interposed between said second sheet of glass (8) and a third sheet of glass (10).

7. A pane as claimed in any one of the preceding claims, wherein said transparent plastics material which resists impacts is a polycarbonate.

8. A pane as claimed in any one of the claims 1 to 7, wherein said sealing element comprises a U-section frame (13) constituting an outer sealing element which extends around said pane and which has flanges (14a, 14b) of the U which are adhered against the outer faces of said composite pane, said frame having two peripheral inwardly projecting annular portions (16a, 16b) which form an inner sealing element and are each disposed between a marginal portion of the sheet (2) of plastics material and a facing marginal portion of the adjacent sheet of glass (5, 7), said projecting portions (16a, 16b) being adhered to said sheet of glass (5, 7).

9. A pane as claimed in claim 5, wherein said frame (13) and said projecting portions (16a, 16b) are in one piece and are made from a plastics material.